Europäisches Patentamt

European Patent Office

Office européen des brevets

(19)

(11) **EP 1 365 122 A2**

## (12) DEMANDE DE BREVET EUROPEEN

(43) Date de publication:
**26.11.2003 Bulletin 2003/48**

(51) Int Cl.[7]: **F01N 11/00**

(21) Numéro de dépôt: **03291212.3**

(22) Date de dépôt: **22.05.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(30) Priorité: **24.05.2002 FR 0206343**

(71) Demandeur: **Renault s.a.s.
92100 Boulogne Billancourt (FR)**

(72) Inventeurs:
• **Bourret, Stéphane
91410 Saint Cyr sous Dourdan (FR)**
• **Meurisse, Olivier
92160 Antony (FR)**
• **Leprieur, Laurent
91470 Limours (FR)**

(54) **Procédé pour évaluer l'efficacité d'un convertisseur catalytique d'oxydation**

(57) L'invention propose un procédé pour évaluer l'efficacité d'un convertisseur catalytique (42) du type qui est implanté dans une ligne d'échappement (16) d'un moteur (14) à combustion interne à injection directe de véhicule automobile, du type qui oxyde des éléments réducteurs contenus dans les gaz d'échappement avec une efficacité ($\varepsilon_{co}$), l'efficacité du convertisseur catalytique (42) étant évaluée lorsque la température des gaz d'échappement ($T_G$) est supérieure à une température de référence ($T_{réf}$), caractérisé en ce qu'il comporte une première étape (S1) de déclenchement de l'évaluation au cours de laquelle la température des gaz d'échappement ($T_G$) en amont du convertisseur catalytique (42) est déterminée, et une seconde étape (S2) d'évaluation de l'efficacité du convertisseur catalytique (42) qui comporte une opération d'estimation de l'efficacité ($\varepsilon_{co}$) du convertisseur catalytique (42), le convertisseur catalytique (42) étant déclaré comme bon si son efficacité ($\varepsilon_{co}$) est supérieure à un seuil d'efficacité minimum ($\varepsilon_{seuil}$).

Fig. 1

EP 1 365 122 A2

## Description

L'invention concerne un procédé pour évaluer l'efficacité d'un convertisseur catalytique.

L'invention concerne plus particulièrement un procédé pour évaluer l'efficacité d'un convertisseur catalytique du type qui est implanté dans une ligne d'échappement d'un moteur à combustion interne à injection directe de véhicule automobile, notamment du type diesel, du type qui oxyde des éléments réducteurs contenus dans les gaz d'échappement avec une efficacité supérieure à une valeur de performance déterminée lorsque la température des gaz d'échappement excède une température déterminée dite d'amorçage du convertisseur catalytique, l'efficacité du convertisseur catalytique étant évaluée lorsque la température des gaz d'échappement est supérieure à une température de référence.

Les moteurs diesel et certains moteurs à essence fonctionnant à mélange pauvre émettent des substances polluantes, telles que des hydrocarbures imbrûlés (HC) ou du monoxyde de carbone (CO), qui sont rejetées dans l'atmosphère avec les gaz d'échappement. Pour des raisons de respect de l'environnement, il est nécessaire de diminuer fortement, voire de supprimer ces substances polluantes.

A cette fin, il est connu de disposer un convertisseur catalytique dans le circuit d'échappement du moteur pour oxyder le monoxyde de carbone (CO) et les hydrocarbures imbrûlés (HC), qui sont des molécules réductrices, en dioxyde de carbone ($CO_2$) et en vapeur d'eau ($H_2O$).

Le convertisseur catalytique comporte notamment un monolithe, qui est une structure poreuse présentant une grande surface de contact avec les gaz d'échappement, et qui est imprégné d'une phase catalytique possédant les propriétés oxydantes précédemment décrites.

Le convertisseur catalytique peut aussi être un filtre à particules ou un piège à oxyde d'azote, dit « NOxtrap », dont les parois sont enduites de phase catalytique. Ces différents types de convertisseurs catalytiques peuvent être combinés dans une seule ou dans plusieurs lignes d'échappement.

Pour la suite de la description, nous définissons le taux ou l'efficacité d'oxydation d'un élément réducteur par le convertisseur catalytique, par exemple du monoxyde de carbone $\varepsilon_{co}$, selon l'équation 1 qui suit :

$$\varepsilon_{co} = \frac{[CO]_{amont} - [CO]_{aval}}{[CO]_{amont}} * 100$$

dans laquelle $[CO]_{amont}$ est la concentration de monoxyde de carbone contenu dans les gaz d'échappement en amont du convertisseur catalytique, et $[CO]_{aval}$ est la concentration de monoxyde de carbone contenu dans les gaz d'échappement en aval du convertisseur catalytique.

Le convertisseur catalytique est dit « amorcé » lorsque son efficacité dépasse un seuil d'efficacité déterminé, qui est traditionnellement égal à 50%. L'efficacité d'un convertisseur catalytique est principalement proportionnelle à la température des gaz d'échappement en amont du convertisseur catalytique. Le convertisseur catalytique est donc amorcé lorsque la température des gaz d'échappement en amont du convertisseur catalytique dépasse une température dite d'amorçage $T_a$.

De plus, la température d'amorçage d'un convertisseur catalytique dépend aussi d'une vitesse volumique horaire (VVH) des gaz d'échappement à travers le convertisseur catalytique qui est définie dans l'équation 2 qui suit :

$$VVH = \frac{Qv}{V_{cc}}$$

dans laquelle $Q_v$ est le débit volumique de gaz d'échappement traversant le convertisseur catalytique, et $V_{cc}$ est le volume du convertisseur catalytique.

En vieillissant, le convertisseur catalytique subit des modifications irréversibles causées notamment par des contraintes thermomécaniques ou par un « empoisonnement » par des éléments contenus dans le carburant ou le lubrifiant.

Les symptômes du vieillissement du convertisseur catalytique sont principalement une augmentation de la température d'amorçage du convertisseur et, de manière moins sensible, une baisse de l'efficacité d'oxydation des hydrocarbures et du monoxyde de carbone pour des températures de gaz d'échappement supérieures à la température d'amorçage.

La norme européenne E-OBD impose de surveiller la baisse d'efficacité du convertisseur catalytique et de détecter un dysfonctionnement qui augmenterait les émissions de substances polluantes au-delà d'un seuil de pollution autorisé. Pour ce faire, un système de diagnostic doit être embarqué à bord du véhicule automobile et doit être intégré à la gestion du moteur.

On connaît plusieurs procédé destinés à surveiller le vieillissement d'un convertisseur catalytique.

Les documents US-A-5.177.464, US-A-5.265.417 et CA-A-2.077.152 décrivent un procédé pour estimer l'efficacité d'un convertisseur catalytique grâce à des moyens pour mesurer les concentrations en hydrocarbure HC en amont et en aval d'un convertisseur catalytique. Cette efficacité estimée est ensuite comparée à une efficacité de référence afin de déterminer si le convertisseur catalytique est trop polluant.

Cependant ce procédé ne prend pas en compte la température des gaz d'échappement en amont du convertisseur catalytique. Or l'efficacité du convertisseur catalytique dépend de cette température. L'évaluation du vieillissement du convertisseur catalytique est donc variable en fonction de façon dont roule le véhicule, c'est-à-dire de la température des gaz d'échappement en amont du convertisseur catalytique.

Le document EP-A-0.999.352 décrit un procédé permettant de surveiller la température d'amorçage d'un convertisseur catalytique. Le dispositif pour la mise en oeuvre de ce procédé comporte notamment un capteur de température pour mesurer la température du convertisseur catalytique, et il comporte aussi un capteur d'éléments (et notamment d'oxygène $O_2$, de dioxyde de carbone $CO_2$ ou d'hydrocarbures HC) contenus dans les gaz d'échappement qui est disposé en aval du convertisseur catalytique.

Des mesures sont effectuées cycliquement par le capteur d'éléments selon une fréquence déterminée. Lorsque la différence entre deux mesures successives est supérieure à un seuil précalibré, le convertisseur catalytique est considéré comme amorcé. La température d'amorçage du convertisseur catalytique est alors mesurée par le capteur de température. Si la température d'amorçage mesurée est supérieure à une température de référence, le convertisseur catalytique est considéré comme trop polluant.

Cependant, la température de référence ne dépend pas du débit des gaz d'échappement à travers le convertisseur catalytique. La précision de l'évaluation du vieillissement du convertisseur catalytique est donc dépendante du débit des gaz d'échappement, c'est-à-dire des conditions d'utilisation du véhicule automobile.

Afin de résoudre ces problèmes la présente invention propose un procédé du type décrit précédemment, caractérisé en ce que caractérisé en ce qu'il comporte :

- une première étape de déclenchement de l'évaluation au cours de laquelle la température des gaz d'échappement en amont du convertisseur catalytique est déterminée ;
- une seconde étape d'évaluation de l'efficacité du convertisseur catalytique qui est déclenchée lorsque ladite température des gaz d'échappement est égale à la température de référence, et qui comporte une opération d'estimation par calcul de l'efficacité du convertisseur catalytique à partir des concentrations en éléments réducteurs en amont et en aval du convertisseur catalytique, le convertisseur catalytique étant déclaré comme bon si son efficacité est supérieure à un seuil d'efficacité minimum.

Selon d'autres caractéristiques de l'invention :

- la température de référence varie en fonction du débit des gaz d'échappement et du volume du convertisseur catalytique ;
- le débit de gaz d'échappement est déterminé à partir de la pression des gaz d'échappement évaluée en amont du convertisseur catalytique, ainsi qu'en fonction de paramètres de fonctionnement du moteur, notamment du régime et du couple ;
- la température des gaz d'échappement en amont du convertisseur catalytique est mesurée ;
- la température des gaz d'échappement en amont du convertisseur catalytique est estimée à partir de paramètres de fonctionnement du moteur ;
- la concentration en éléments réducteurs, et notamment en monoxyde de carbone, en aval du convertisseur catalytique est mesurée ;
- la concentration en éléments réducteurs, et notamment en monoxyde de carbone, en amont du convertisseur catalytique est estimée en fonction de paramètres de fonctionnement du moteur.

D'autres caractéristiques et avantages de l'invention apparaîtront au cours de la lecture de la description détaillée qui suit, pour la compréhension de laquelle on se reportera aux figures annexées parmi lesquelles :

- la figure 1 représente schématiquement un groupe motopropulseur dont le circuit d'échappement est équipé d'un convertisseur catalytique ;
- la figure 2 est un graphe illustrant, en fonction de la température des gaz d'échappement en amont du convertisseur catalytique, l'efficacité d'un convertisseur catalytique neuf et l'efficacité d'un convertisseur catalytique usagé ;
- la figure 3 est un graphe illustrant, en fonction de la température des gaz d'échappement en amont du convertisseur catalytique, l'efficacité du convertisseur catalytique soumis à trois débit de gaz d'échappement différents ;
- la figure 4 est un schéma-blocs qui explique un mode de réalisation du procédé selon l'invention.

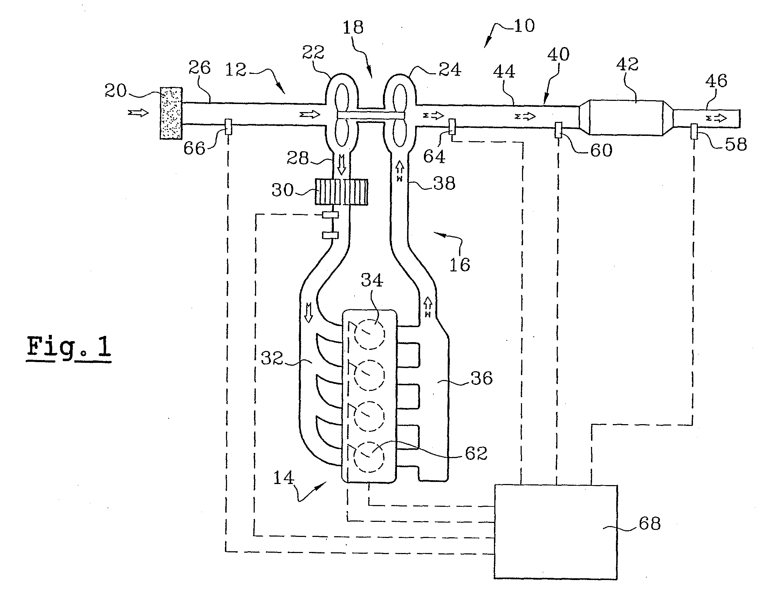

On a représenté à la figure 1 un groupe motopropulseur 10 d'un véhicule automobile qui comprend principalement un circuit d'admission d'air 12, un moteur 14, un circuit d'échappement 16 et un turbocompresseur 18.

Le moteur 14 est un moteur diesel ou un moteur à essence fonctionnant en mélange pauvre, tel qu'un moteur à essence à injection directe, comportant au moins une chambre de combustion 34 et un piston.

Un filtre à air 20 qui est situé en amont du circuit d'admission 12 permet de retenir les particules présentes dans l'air frais provenant de l'atmosphère.

Le turbocompresseur 18 comprend un compresseur 22 qui met sous pression de l'air frais atmosphérique et une turbine 24 qui fournit l'énergie mécanique nécessaire à l'entraînement du compresseur 22.

Le circuit d'admission 12 comporte un conduit d'entrée 26 qui alimente en air frais le compresseur 22. L'air frais compressé est ensuite conduit, par l'intermédiaire d'un conduit d'admission 28 qui comporte un système de refroidissement de l'air 30, jusqu'à un collecteur d'admission 32 qui répartit l'air dans des chambres de combustion 34 du moteur 14.

Après la combustion, les gaz d'échappement sous pression sont rejetés, par l'intermédiaire d'un collecteur d'échappement 36, dans une conduite d'alimentation 38 de la turbine 24.

Les gaz d'échappement sont ensuite rejetés dans l'atmosphère par une conduite d'échappement 40 du circuit d'échappement 16.

Un convertisseur catalytique d'oxydation 42 est intercalé dans la conduite d'échappement 40. La conduite d'échappement 40 est alors divisée en un tronçon amont 44 et un tronçon aval 46. Le convertisseur catalytique 42 permet notamment d'oxyder des molécules réductrices contenues dans les gaz d'échappement, telles que le monoxyde de carbone (CO) ou les hydrocarbures imbrûlés (HC), en dioxyde de carbone ($CO_2$) et en vapeur d'eau ($H_2O$).

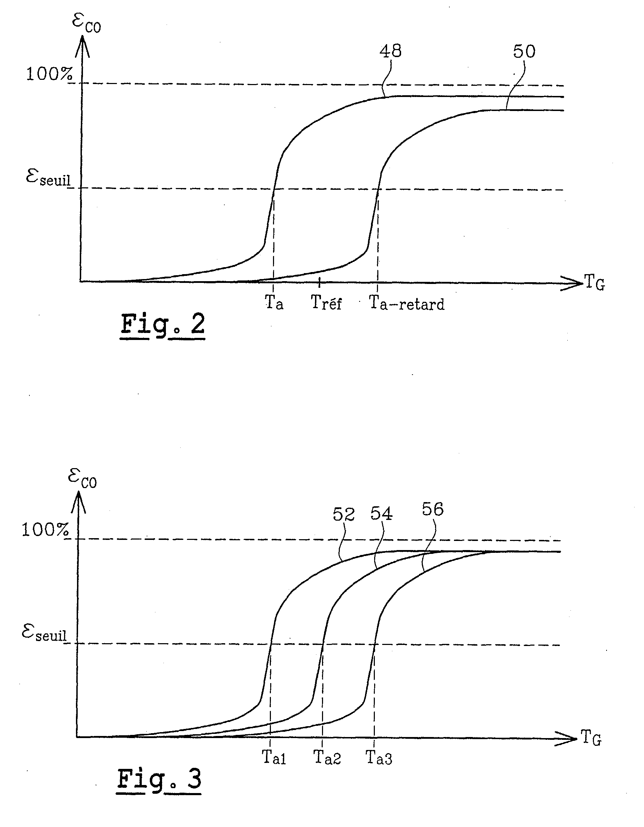

L'efficacité de l'oxydation des éléments réducteurs par le convertisseur catalytique 42 dépend principalement de la température des gaz d'échappement en amont du convertisseur catalytique 42. Ainsi la courbe 48 de la figure 2 représente l'efficacité $\varepsilon_{co}$ du convertisseur catalytique 42 dans un état neuf en fonction de la température des gaz d'échappement en amont $T_G$.

Le convertisseur catalytique 42 est ici considéré comme amorcé lorsque son efficacité $\varepsilon_{co}$ est égale à un seuil d'efficacité $\varepsilon_{seuil}$ précalibré. La température des gaz d'échappement $T_G$ en amont du convertisseur catalytique 42 correspondant à ce seuil d'efficacité $\varepsilon_{seuil}$ est appelée la température d'amorçage du convertisseur $T_a$.

La courbe 50 représente l'efficacité $\varepsilon_{co}$ du convertisseur catalytique 42 dans un état usagé en fonction de la température des gaz d'échappement $T_G$. La température d'amorçage du convertisseur usagé $T_{a\text{-}retardé}$ est alors plus élevé que la température d'amorçage du convertisseur neuf $T_a$.

Pour un état d'usage déterminé du convertisseur catalytique 42, la température d'amorçage $T_a$ varie en fonction de la vitesse volumique horaire VVH des gaz d'échappement à travers le convertisseur catalytique 42.

A titre d'exemple, le graphe de la figure 3 représente, en fonction de la température des gaz d'échappement $T_G$, trois courbes 52, 54 et 56 de l'efficacité $\varepsilon_{co}$ du convertisseur catalytique 42 pour trois vitesses volumiques horaires $VVH_1$, $VVH_2$ et $VVH_3$ respectivement. A chacune des trois vitesses volumiques horaires $VVH_1$, $VVH_2$ et $VVH_3$ correspond une température d'amorçage $T_{a1}$, $T_{a2}$ et $T_{a3}$ respectivement.

Ainsi, le procédé selon les enseignements de l'invention propose d'évaluer l'efficacité d'un convertisseur catalytique en comparant sa température d'amorçage $T_a$ avec une température de référence $T_{réf}$ qui est fonction de la vitesse volumique horaire VVH des gaz d'échappement.

Afin de mettre en oeuvre le procédé, le groupe motopropulseur 10 est équipé de différents types de capteurs, parmi lesquels :

- un capteur de réducteur 58 qui mesure la concentration d'éléments réducteurs contenus dans les gaz d'échappement, et qui est situé dans le tronçon aval 46 de la conduite d'échappement 40 ;
- un capteur 60 de la température des gaz d'échappement qui est situé dans le tronçon amont 46 de la conduite d'échappement 40 ;
- un capteur 64 de la pression dans le tronçon amont 44 du conduit d'échappement 40 du moteur 14 ; et
- un débitmètre 66 pour mesurer le débit d'air admis dans le moteur 14.

Tous ces capteurs sont reliés électriquement à un calculateur électronique 68 embarqué à bord du véhicule automobile.

Le calculateur électronique 68 comporte en mémoire une cartographie C d'une température de référence $T_{réf}$ qui varie en fonction de la vitesse volumique horaire VVH des gaz d'échappement à travers le convertisseur catalytique 42.

La température de référence $T_{réf}$ est définie de façon que, pour une vitesse volumique horaire VVH déterminée, un convertisseur catalytique 42 dont l'amorçage s'effectue à une température $T_a$ supérieur à la température de référence $T_{réf}$ soit évalué comme trop polluant. Ceci est illustré à la figure 2 :

- le convertisseur catalytique 42 représenté par la courbe 48 n'est pas dégradé puisque sa température d'amorçage $T_a$ est inférieure à la température de référence $T_{réf}$ ;
- le convertisseur catalytique 42 représenté par la courbe 50 est dégradé car sa température d'amorçage $T_{a\text{-}retard}$ est supérieure à la température de référence $T_{réf}$.

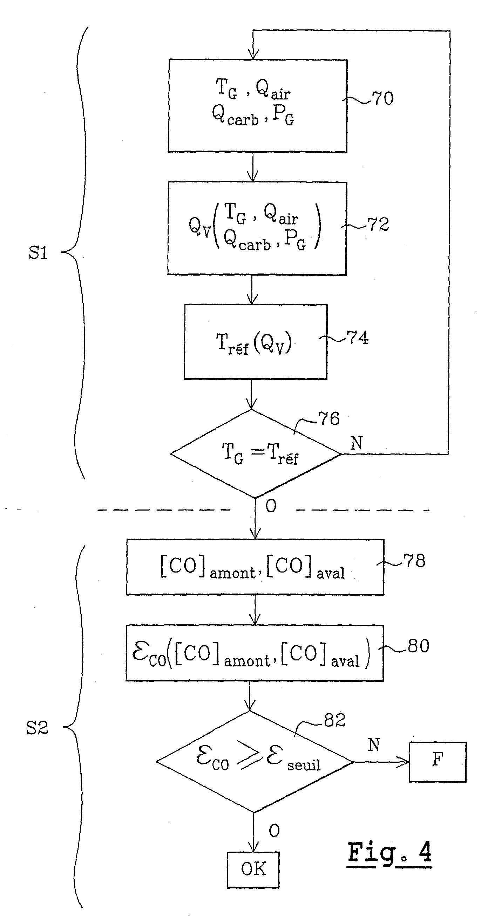

Le procédé d'évaluation de l'efficacité du convertisseur catalytique 42 est illustré à la figure 4. Il comporte principalement deux étapes :

- une première étape S1 de déclenchement de l'évaluation; et
- une seconde étape S2 d'évaluation de l'efficacité du convertisseur catalytique 42.

Le premier pas 70 de l'étape S1 consiste à prélever les mesures instantanées suivantes :

- la température $T_G$ des gaz d'échappement en amont du convertisseur catalytique 42 est mesurée par le capteur de température 60 ;
- la pression des gaz d'échappement $P_G$ est mesurée par le capteur de pression 64 ;
- le débit massique $Q_{air}$ d'air admis dans le moteur 14 est mesuré par le débitmètre 66 ; et
- le débit massique $Q_{carb}$ de carburant injecté dans les chambres de combustion 34 est déterminé par le calculateur électronique 68 qui pilote des injecteurs 62.

Selon un autre mode de réalisation, la température $T_G$ des gaz d'échappement en amont du convertisseur catalytique 42 est estimée en fonction de paramètres de fonctionnement du moteur.

Lors du deuxième pas 72, le débit des gaz d'échappement est estimé par le calculateur électronique 68 selon l'équation 3 suivante :

$$Q_v = \frac{(Q_{air} + Q_{carb}) * (T_G + 273,15) * K}{100 * P_G}$$

dans laquelle K est une constante.

Durant le troisième pas 74 la vitesse volumique horaire instantanée VVH des gaz d'échappement dans le convertisseur catalytique 42 est alors calculée selon l'équation 2. Cette vitesse volumique horaire instantanée VVH permet au calculateur électronique 68 de déterminer la température de référence $T_{réf}$ correspondante à partir de la cartographie C.

La première étape S1 s'achève par un test 76 au cours duquel la température des gaz d'échappement $T_G$ est comparée avec la température de référence $T_{réf}$. La deuxième étape S2 est activée lorsque ces deux températures sont sensiblement égales, sinon le procédé est réitéré au premier pas 70 de la première étape S1.

Lorsque le test 76 est vrai, le premier pas 78 de la seconde étape S2 est enclenché. La concentration de monoxyde de carbone dans les gaz d'échappement en amont du convertisseur catalytique 42 $[CO]_{amont}$ est estimée par le calculateur électronique 68 en fonction de paramètres de fonctionnement du moteur 14. La concentration de monoxyde de carbone dans les gaz d'échappement dans les gaz d'échappement en aval du convertisseur catalytique 42 $[CO]_{aval}$ est mesurée par le capteur de réducteur 58 puis transmise au calculateur électronique 68.

Lors du pas 80, l'efficacité instantanée du convertisseur catalytique 42 $\varepsilon_{co}$ est calculée par le calculateur électronique 68 selon l'équation 1 en fonction des deux valeurs $[CO]_{amont}$ et $[CO]_{aval}$.

Le procédé se termine par le test 82 au cours duquel l'efficacité $\varepsilon_{co}$ est comparée avec le seuil d'efficacité $\varepsilon_{seuil}$. Le test est vrai si l'efficacité $\varepsilon_{co}$ est supérieure ou égale au seuil d'efficacité $\varepsilon_{seuil}$.

Si le test 82 est vrai, cela signifie que le convertisseur catalytique 42 est amorcé et donc que la température d'amorçage $T_a$ du convertisseur catalytique 42 est inférieure à la température de référence $T_{réf}$. Le convertisseur catalytique 42 est donc considéré comme non polluant à l'égard des normes en vigueur.

Si le test 82 est faux, cela signifie que le convertisseur catalytique 42 n'est pas amorcé et que la température d'amorçage $T_a$ est donc supérieure à la température de référence $T_{réf}$. Le convertisseur catalytique 42 est donc considéré comme trop polluant à l'égard des normes en vigueur.

Selon un autre mode de réalisation, si le test 82 est faux, le procédé est réitéré avec une température de référence $T_{réf}$ qui est déduite d'une seconde cartographie C2 en fonction de la vitesse volumique horaire VVH, et qui est supérieure à la température de référence $T_{réf}$ utilisée à l'itération précédente du procédé. Cela permet par exemple d'évaluer différents degrés d'efficacité du convertisseur catalytique.

## Revendications

1. Procédé pour évaluer l'efficacité d'un convertisseur catalytique (42) du type qui est implanté dans une ligne d'échappement (16) d'un moteur (14) à combustion interne à injection directe de véhicule automobile, notamment du type diesel, du type qui oxyde des éléments réducteurs contenus dans les gaz d'échappement avec une efficacité ($\varepsilon_{co}$) supérieure à une valeur de performance ($\varepsilon_{seuil}$) déterminée lorsque la température des gaz d'échappement ($T_G$) excède une température déterminée ($T_a$) dite d'amorçage du convertisseur catalytique (42), l'efficacité du convertisseur catalytique (42) étant évaluée lorsque la température des gaz d'échappement ($T_G$) est supérieure à une température de référence ($T_{réf}$),
   **caractérisé en ce qu'**il comporte :

   - une première étape (S1) de déclenchement de l'évaluation au cours de laquelle la température des gaz d'échappement ($T_G$) en amont du convertisseur catalytique (42) est déterminée ;
   - une seconde étape (S2) d'évaluation de l'efficacité du convertisseur catalytique (42) qui est déclenchée lorsque ladite température des gaz d'échappement ($T_G$) est égale à la température de référence ($T_{réf}$), et qui comporte une opération d'estimation par calcul de l'efficacité ($\varepsilon_{co}$) du convertisseur catalytique (42) à partir des concentrations en éléments réducteurs en amont et en aval du convertisseur catalytique (42), le convertisseur catalytique (42) étant déclaré comme bon si son efficacité ($\varepsilon_{co}$) est supérieure à un seuil d'efficacité minimum ($\varepsilon_{seuil}$).

2. Procédé selon la revendication précédente, **caractérisé en ce que** la température de référence ($T_{réf}$) varie en fonction du débit des gaz d'échappement ($Q_v$) et du volume du convertisseur catalytique (42).

3. Procédé selon la revendication précédente, **caractérisé en ce que** le débit de gaz d'échappement ($Q_v$) est déterminé à partir de la pression des gaz d'échappement ($P_G$) évaluée en amont du convertisseur catalytique (42), ainsi qu'en fonction de paramètres de fonctionnement du moteur (14), notamment du régime et du couple.

4.  Procédé selon la revendication 1, **caractérisé en ce que** la température des gaz d'échappement ($T_G$) en amont du convertisseur catalytique (42) est mesurée.

5.  Procédé selon la revendication 1, **caractérisé en ce que** la température des gaz d'échappement ($T_G$) en amont du convertisseur catalytique (42) est estimée à partir de paramètres de fonctionnement du moteur.

6.  Procédé selon la revendication 1, **caractérisé en ce que** la concentration en éléments réducteurs, et notamment en monoxyde de carbone, en aval du convertisseur catalytique (42) est mesurée.

7.  Procédé selon la revendication 1, **caractérisé en ce que** la concentration en éléments réducteurs, et notamment en monoxyde de carbone, en amont du convertisseur catalytique (42) est estimée en fonction de paramètres de fonctionnement du moteur (14).

Fig. 1

Fig. 2

Fig. 3

$$T_G, Q_{air}$$
$$Q_{carb}, P_G \quad \sim 70$$

$$Q_V \left( \begin{array}{c} T_G, Q_{air} \\ Q_{carb}, P_G \end{array} \right) \sim 72$$

$$T_{réf}(Q_V) \quad \sim 74$$

$$\sim 76$$
$$T_G = T_{réf} \quad N$$

S1

O

$$[CO]_{amont}, [CO]_{aval} \quad \sim 78$$

$$\mathcal{E}_{CO}\left([CO]_{amont}, [CO]_{aval}\right) \sim 80$$

$$\sim 82$$
$$\mathcal{E}_{CO} \geqslant \mathcal{E}_{seuil} \quad N \quad F$$

O

S2

OK

## Fig. 4